# EUROPÄISCHE PATENTSCHRIFT

(11) **EP 0 627 455 B1**
(45) Veröffentlichungstag und Bekanntmachung des Hinweises auf die Patenterteilung: **29.12.1997**
(21) Anmeldenummer: 94108074.9
(22) Anmeldetag: 26.05.1994
(51) Int. Cl.: C08J 3/09, C09D 133/08, C09D 133/10, C08L 33/08, C08L 33/10

(54) **Polymerdispersion, deren Herstellung und Verwendung in Überzugsmitteln**
Polymer dispersion, its preparation and use in coatings
Dispersion de polymère, sa préparation et utilisation dans des revêtements

(30) Priorität: 29.05.1993 DE 4318046
(43) Veröffentlichungstag der Anmeldung: 07.12.1994
(73) Patentinhaber: Herberts Gesellschaft mit beschränkter Haftung, 42285 Wuppertal (DE)
(72) Erfinder: Schönrock, Hans-Martin, D-42289 Wuppertal (DE); Lenhard, Werner, Dr., D-42289 Wuppertal (DE); Stolzenbach, Heinrich, Dr., D-42369 Wuppertal (DE)
(74) Vertreter: Türk, Gille, Hrabal, Leifert

(56) Entgegenhaltungen:
- FR-A- 2 018 843
- FR-A- 2 367 107
- US-A- 4 025 037

## Beschreibung

Die Erfindung betrifft Polymerdispersionen bzw. Polymerphasen mit nicht-Newtonschem Fließverhalten, die zur Herstellung von Überzugsmitteln, insbesondere für Effektlackierungen, insbesondere Metalliclackierungen, geeignet sind.

Bei der Herstellung von Metalliclackierungen werden den Überzugsmitteln Bestandteile, wie Celluloseester, beispielsweise Celluloseacetobutyrat oder Microgele, zugesetzt, die eine gute Ausrichtung des Metallpigmentes in dem Überzugsmittel ermöglichen und somit einen guten Flop-Effekt ergeben.

Bisher war es schwierig, Überzugsmittel zur Erzielung von Metallic-Effekten bereitzustellen, die große Festkörpergehalte aufweisen, da hierdurch die gewünschte Orientierung der Metallpigmente beeinträchtigt wurde. Die Verwendung effektbegünstigender Stoffe, wie Celluloseacetobutyrat, machten es notwendig, große Lösemittelmengen einzusetzen, um Applikationsviskosität zu erreichen, wodurch sich Emissions- und Entsorgungsprobleme ergaben.

In der EP-B-0 029 637 werden Überzugsmittel auf Acrylharzbasis beschrieben, die durch Zusatz von wäßrigen Microgelemulsionen eine verbesserte Pigmentorientierung aufweisen. Die Microgelemulsionen werden durch Emulsionspolymerisation von Alkylestern der Acryl- oder Methacrylsäure, Styrol und alpha-Methylstyrol mit Monomeren, die eine Carboxylgruppe oder Hydroxylgruppe enthalten, und Entfernen des Wassers, hergestellt. Derartige Emulsionen lassen sich nur in Überzugsmitteln auf Acrylharzbasis einsetzen.

Aufgabe der Erfindung ist die Bereitstellung von Additiven, die zu beliebigen Überzugsmitteln auf Lösemittelbasis gefügt werden können, einen hohen Festkörpergehalt der Überzugsmittel ermöglichen und die Verwendbarkeit der Überzugsmittel mit hohem Festkörpergehalt zur Ausbildung von Effektlackierungen, insbesondere von Metalliclackierungen mit gutem Flop-Effekt, gewährleisten. Die Additive sollen daher insbesondere für Basislacke auf Lösemittelbasis geeignet sein, die für Mehrschichtlackierungen verwendet werden können.

Erfindungsgemäß wird diese Aufgabe gelöst durch Bereitstellung von aus wäßrigen Polymerdispersionen hergestellten flüssigen Polymerzubereitungen mit nicht-Newtonschem Fließverhalten, die Überzugsmittel auf Lösemittelbasis zugesetzt werden können und beispielsweise die bisher in Überzugsmitteln eingesetzten festkörperreduzierenden Celluloseester vollständig oder teilweise ersetzen.

Gegenstand der Erfindung sind somit flüssige Polymerzubereitungen mit nicht-Newtonschem Fließverhalten, die hergestellt werden können aus
a) einer wäßrigen Dispersion mit einer Viskosität von 20 bis 200 mPa.s mit einem Feststoffgehalt von 30 bis 60 Gew.-%, bezogen auf das Gewicht der Dispersion, eines oder mehrerer dispergierter Polymerer mit einer Molmassenverteilung von 50000 bis über eine Million, mit einer Uneinheitlichkeit D = Mw/Mn größer 2, bevorzugt von 3 bis 20 und besonders bevorzugt von 3 bis 10, wobei 20 bis 60 Gew.-% des Festkörpers der dispergierten Polymeren eine Molmasse von über eine Million aufweisen, und erhältich sind durch Suspensions- oder Emulsionspolymerisation von
   2 - 10 Gew.-% Acrylnitril und/oder Methacrylnitril,
   1 - 3 Gew.-% Acrylamid und/oder Methacrylamid und
   87 - 97 Gew.-% eines oder mehrerer Acrylsäureester- und/oder Methacrylsäureester-monomerer,
   wobei die Acrylsäureester- und Methacrylsäureester-monomeren durch weitere ethylenisch ungesättigte Comonomere in einer Menge bis zu 40 Gew.-% der gesamten Monomeren ersetzt sein können, in einem wäßrigen Medium, durch
b) Zugabe einer derartigen Menge eines mit Wasser nicht mischbaren, die Polymeren anlösenden oder anquellenden Lösemittels, daß die Viskosität der wäßrigen Dispersion auf mindestens das 10⁴-fache der ursprünglichen Viskosität der wäßrigen Dispersion ansteigt, jedoch nur bis maximal zum Erreichen der Grenze bei der eine Phasentrennung auftritt, und
c) gleichzeitig oder anschließenden Zusatz eines sowohl mit Wasser als auch mit dem anlösenden oder anquellenden Lösemittel mischbaren Verdünnungsmittels in einer Menge zur Erzielung einer Viskosität der fertigen Polymerzubereitung von 25 bis 1000 mPa.s, wonach
d) gegebenenfalls Wasser ganz oder teilweise entfernt wird.

Die Viskosität der in c) erhaltenen Dispersion oder Dispersionsphase kann z.B. im Rotationsviskosimeter, z.B. bei einem Schergefälle D = 150s⁻¹, gemessen werden.

Das Wasser kann in der Stufe d) gemäß einer bevorzugten Ausführungsform gegebenenfalls nach Zusatz eines mit Wasser azeotrop destillierbaren organischen Verdünnungsmittels, durch azeotrope Destillation entfernt werden. Dabei wird Wasser azeotrop solange entfernt, bis eine homogene, organisch gequollene Polymerphase entsteht, die bei weiterem Verdünnen mit üblichen organischen Lacklösemitteln homogen bleibt.

Die erfindungsgemäßen Polymerzubereitungen mit nicht-Newtonschem Fließverhalten werden hergestellt ausgehend von wäßrigen Polymerdispersionen, die durch Suspensions- bzw. Emulsionspolymerisation in wäßrigem Medium erhalten werden. Derartige Suspensions- bzw. Emulsionspolymerisate weisen einen hohen Anteil von Polymeren mit sehr hohen Molmassen, d.h. mit Molmassen über eine Million auf. Dieser Anteil liegt bei 20 bis 60 Gew.-% des Festkörpers der Polymerisate. Die Molmassenverteilung der Polymeren ist sehr breit. Sie beginnt bei 50000. Die Uneinheitlichkeit D, die sich aus dem Quotienten von Gewichtsmittel und Zahlenmittel der Molmasse (Mw/Mn), errechnet, liegt dabei über 2, bevorzugt bei 3 bis 20, besonders bevorzugt bei 3 bis 10.

Beispiele für die bei der Suspensionspolymerisation einsetzbaren Ester von Acrylsäure und Methacrylsäure sind solche mit niedrigen Alkanolen, wie Alkanolen mit 1 bis 4 Kohlenstoffatomen. Spezielle Beispiele sind Acrylsäureethylester, Methacrylsäureethylester, Acrylsäure-n-butylester un Methacrylsäure-n-butylester. Die Ester können allein oder im Gemisch eingesetzt werden, wobei Gemische bevorzugt sind. Gemäß einer bevorzugten Ausführungsform werden Gemische von Ethylacrylat, Ethylmethacrylat, n-Butylacrylat und n-Butylmethacrylat eingesetzt. Bevorzugt werden in solchen Gemischen die Estermonomeren in annähernd gleichen Gewichtsmengen verwendet.

Zur Herstellung der wäßrigen Dispersion in der Stufe a) kann ein Teil der Acrylsäureester- und/oder Methacrylsäureester-monomeren durch weitere ethylenisch ungesättigte Comonomere ersetzt sein. Die zusätzlichen ethylenisch ungesättigten Comonomeren können in derartigen Mengen eingesetzt werden, daß sie bis zu 40 Gew.-% der gesammten Monomeren betragen. Werden beispielsweise 40 Gew.-% anderer Comonomerer eingesetzt, so liegt die Untergrenze der verwendeten Acrylsäureester- und/oder Methacrylsäureester-Monomeren bei 47 Gew.-%. Bei den zusätzlich verwendbaren ethylenisch ungesättigten Comonomeren handelt es sich um Comonomere, die unterschiedlich von Acrylnitril, Methacrylnitril, Acrylamid, Methacrylamid, Acrylsäureestern und Methacrylsäureestern sind. Beispiele für derartige zusätzliche Comonomere sind alpha/beta ungesättigte Carbonsäuren, wie Acrylsäure und/oder Methacrylsäure, weitere übliche copolymerisierbare ethylenisch ungesättigte Monomere, wie Vinylverbindungen aromatischer und aliphatischer Art, z.B. Styrol und Styrolderivate, Vinylether und Vinylester. Die Comonomeren können allein oder im Gemisch eingesetzt werden. Die Comonomeren können auch mehr als eine Unsättigung enthalten. In diesem Fall können sie mehrfach reaktiv sein, das heißt sie können zu Verzweigungen oder Vernetzungen der Polymerteilchen der Dispersion führen. In diesem Falle werden bevorzugt 0,002 bis 5 Gew.-% der Comonomeren, bezogen auf sämtliche eingesetzten Monomeren, verwendet. Beim Einsatz von Di- oder Polyolefinen können beispielsweise derartige Mengen verwendet werden, daß eine Vernetzungsdichte der erhaltenen Teilchen von mindestens 0,05 mmol/g erhalten wird. Beispiele für derartige mehrfunktionelle Comonomere, die allein oder im Gemisch verwendet werden können, sind Di- oder Polyolefine, wie z.B. Triethylenglykoldimethacrylat, Allylmethacrylat, Divinylbenzol, Ethylenglykoldimethacrylat, Ethylenglykoldiacrylat, Butandioldimethacrylat, Butandioldiacrylat, Triallylcyanurat, Diallylphthalat, Bisphenol-A-diethylenglykoldimethacrylat und Methylenbismethacrylamid, sowie Melamin und Isocyanatoethylmethacrylat.

Die Dispersion enthält 30 bis 60 Gew.-% Polymere, wobei der Rest vorwiegend aus Wasser und gegebenenfalls geringen Mengen von durch die Herstellung eingeschleppten Lösemitteln und Hilfsstoffen besteht.

Die Suspensionspolymerisation kann in wäßrigem Medium in üblicher, dem Fachmann geläufiger, Weise durchgeführt werden. Beispielsweise kann nach dem Verfahren der deutschen Offenlegungsschrift DE-A-38 30 626 gearbeitet werden. Insbesondere geeignet ist z.B. die Herstellungsweise des dortigen Herstellungsbeispiels F.

Die Bedingungen der Suspensions- bzw. Emulsionspolymerisation können beliebig gewählt werden. Es ist lediglich darauf zu achten, daß eine Polymerdispersion entsteht, in der 20 bis 60 Gew.-%, bevorzugt 22 bis 45 Gew.-% (bezogen auf den Festkörpergehalt der dispergierten Polymeren) der dispergierten Polymeren eine hohe Molmasse aufweisen, das heißt von über 1000000. Es handelt sich hierbei beispielsweise um den Anteil der dispergierten Polymerphase, der in Tetrahydrofuran bei 25°C unlöslich ist. Der im Tetrahydrofuran bei 25°C lösliche Anteil weist im wesentlichen eine Molmasse von über 50000 auf.

Zur Herstellung der erfindungsgemäßen Polymerzubereitungen mit nicht-Newtonschem Fließverhalten wird von einer wäßrigen in Stufe a) bereiteten Dispersion ausgegangen, die einen derartigen Verdünnungsgrad aufweist, daß ihre Viskosität bei 20 bis 200 mPa.s liegt. Zur wäßrigen Polymerdispersion wird ein Lösemittel gefügt, das geeignet ist das dispergierte Polymere anzulösen oder anzuquellen. Es handelt sich dabei um ein mit Wasser nicht mischbares Lösemittel. Beispiele für derartige Lösemittel sind Carbonsäureester wie z.B. Butylacetat, Methoxypropylacetat oder Ethoxypropylacetat. Das mit Wasser nicht mischbare Lösemittel wird der wäßrigen Polymerdispersion zugesetzt und darin homogen verteilt, beispielsweise durch Bewegen, wie Rühren. Der Zusatz erfolgt bevorzugt bei Temperaturen in der Größenordnung von Raumtemperatur, z.B. 15 bis 30°C.

Beim Zusatz des Lösemittels tritt ein sprunghafter Viskositätsanstieg auf. Das Lösemittel wird in einer derartigen Menge zugesetzt, daß die Viskosität auf das mindestens 10⁴-fache der ursprünglichen Viskosität der wäßrigen Polymerdispersion ansteigt. In der Praxis fügt man das Lösemittel bis zur Grenze der Rührfähigkeit zu. Dabei darf das Lösemittel nicht in derartiger Menge zugegeben werden, daß eine inhomogene Polymerphase gebildet wird. Dies schließt nicht die Bildung einer getrennten Polymerphase und wäßrigen Phase aus; jedoch darf die Polymerphase als solche nicht inhomogen werden; das heißt es dürfen keine Ausscheidungen innerhalb der Polymerphase erfolgen.

Nach Ausbildung des hochviskosen Zustands wird der Polymerphase ein mit Wasser und dem anlösenden oder anquellendem Lösemittel mischbares Verdünnungsmittel langsam zugesetzt. Unter einem mit Wasser mischbaren Verdünnungsmittel ist hier ein organisches Lösemittel zu verstehen, das mit Wasser mischbar ist, jedoch dem Polymeren gegenüber im wesentlichen inert ist, das heißt das Polymere im wesentlichen weder anlöst noch anquillt. Geeignete Beispiele für derartige mit Wasser mischbare Verdünnungsmittel sind Alkohole, wie Alkanole, Alkoxyalkanole, z.B. Methoxypropanol.

Bei der Herstellung der erfindungsgemäßen flüssigen Polymerzubereitungen ist es nicht notwendig, das mit Wasser mischbare Verdünnungsmittel nach Ausbildung des hochviskosen Zustands zuzusetzen. Vielmehr ist es möglich, das Verdünnungsmittel gleichzeitig mit dem mit Wasser nicht mischbaren Lösemittel zuzusetzen. Beispielsweise können die Lösemittel getrennt, gleichzeitig und im Gemisch zugesetzt werden. Wichtig ist, daß beide Lösemittel in derartigen Mengen zugesetzt werden, die bei getrenntem Zusatz zunächst den Viskositätsanstieg (Stufe b) und anschließend die gewünschte Viskosität (Stufe c) ergeben würden.

Beim Zusatz des mit Wasser nicht mischbaren Verdünnungsmittels stellt man eine Viskositätsverringerung fest. Die Zugabe erfolgt z.B. bei einer Temperatur von 20 bis 40°C unter mechanischer Homogenisierung, beispielsweise unter Rühren. Die Zugabe des mit Wasser mischbaren Verdünnungsmittels erfolgt solange, bis eine Viskosität von 25 bis 1000 mPa.s bei Messung mit einem Rotationsviskosimeter bei D = 150s⁻¹ erreicht ist.

Im allgemeinen erhält man eine einzige homogene Dispersionsphase. Ist dies nicht der Fall, so wird zweckmäßig Wasser entfernt. Dies kann beispielsweise durch Zusatz eines mit Wasser azeotrop destillierbaren Lösemittels und azeotrope Destillation erfolgen. Als Lösemittel, die zur azeotropen Destillation geeignet sind, kommen sämtliche organischen Lösungsmittel infrage, die für diesen Zweck bekannt sind, beispielsweise aromatische Lösemittel, wie Xylol.

Die erhaltene Zubereitung die neben mit Wasser nicht mischbarem Lösemittel auch mit Wasser mischbares Lösemittel und Wasser enthält, kann als solche verwertet werden, beispielsweise als Zusatz zu Überzugsmitteln.

Durch die erfindungsgemäße Verfahrensweise werden Polymerzubereitungen mit nicht-Newtonschem Fließverhalten erhalten. Dies kann beispielsweise wie folgt bestätigt werden: Im Low Shear-Viskosimeter wird mit ansteigenden Scherraten beginnend mit niedrigen Scherraten von 10⁻³.s⁻¹, die Viskositätserhöhung in Abhängigkeit vom Schergefälle bestimmt.

Nach der Herstellung der erfindungsgemäßen Polymerzubereitung kann diese üblichen Überzugsmitteln auf Lösemittelbasis zugesetzt werden. Die erfindungsgemäßen Polymerzubereitungen besitzen den Vorteil, daß sie bei der Bereitung von Überzugsmitteln, also beim Verdünnen mit üblichen organischen Lacklösemitteln, homogen bleiben. Sie sind daher geeignet für die Herstellung von allen lösemittelhaltigen Beschichtungen, wie Füllern, Basislacken (bunt und/oder metallic) und gegebenenfalls auch Decklacken. Diese können auf der Basis lacküblicher Lösemittel formuliert werden, wie beispielsweise Glykolether, wie Ethylenglykoldimethylether; Glykoletherester, wie Ethylglykolacetat, Butylglykolacetat, 3-Methoxy-n-butylacetat, Butyldiglykolacetat, Ethoxypropylacetat, Methoxypropylacetat; Ester, wie Methylacetat, Ethylacetat, Butylacetat, Isobutylacetat, Amylacetat; Ketone, wie Methylethylketon, Methylisobutylketon, Diisobutylketon, Cyclohexanon, Isophoron; aromatische Kohlenwasserstoffe, wie Toluol,o-,m-,p-Xylol, Ethylbenzol, SOLVESSO 100^{R} (Gemisch aromatischer Kohlenwasserstoffe mit einem Siedebereich von 153 - 180°C); Alkohole, wie Methanol, Ethanol, n-Propanol, iso-Propanol, n-Butanol, iso-Butanol, sek.-Butanol, tert.-Butanol, Hexanol, 2-Ethylhexanon und aliphatische Kohlenwasserstoffe, wie Heptan, White Spirit^{R} (Testbenzin mit einem Siedebereich von 144 - 165°C) können ebenfalls anteilig mit den oben genannten Lösemitteln eingesetzt werden.

Wie vorstehend erwähnt, bilden einen Gegenstand der Erfindung die definierten Polymerzubereitungen. Einen weiteren Gegenstand der Erfindung bildet das Verfahren zu deren Herstellung. Durch die Einsatzmöglichkeit der erfindungsgemäßen Polymerzubereitungen ist es möglich, Überzugsmittel auf Lösemittelbasis bereitzustellen, die einen weiteren Gegenstand der Erfindung bilden. Die erfindungsgemäßen Überzugsmittel können neben den erfindungsgemäßen Polymerzubereitungen verschiedenste filmbildende Bindemittel enthalten, da die Zubereitungen mit sämtlichen üblichen filmbildenden Bindemitteln verträglich sind. Die erfindungsgemäßen Überzugsmittel können außerdem zu dem organische Lösemittel, wie sie vorstehend definiert sind, sowie Effektpigmente und gegebenenfalls Farbpigmente und lackübliche Additive, wie sie dem Fachmann geläufig sind, beispielsweise Verlaufsmittel, Rheologiehilfsmittel usw. enthalten. Die in den erfindungsgemäßen Überzugsmitteln eingesetzten filmbildenden Bindemittel können selbst- oder fremdvernetzend sein. Es können also zusätzliche Vernetzer enthalten sein.

Besonders geeignete filmbildende Bindemittel sind solche auf Polyesterbasis, wie sie in der Literatur beschrieben werden, beispielsweise in der DE-A-39 13 001.

Mit den erfindungsgemäßen Polymerzubereitungen werden aufgrund ihrer bronzeorientierenden Wirkung bevorzugt Metallicbasislacke aller Art bereitgestellt, insbesondere solche, die bisher mit Celluloseethern, wie Celluloseacetobutyrat, formuliert wurden. Dabei kann speziell bei Basislacken der Celluloseesteranteil teilweise oder ganz (abhängig vom gewünschten Festkörper und Metalliceffekt) durch die Polymerphase ersetzt werden. Entsprechende Basislacke sind dem Fachmann geläufig. Sie enthalten Effektpigmente, wie z.B. Metallplättchen oder solche auf der Basis von Glimmerplättchen und beschichteten Plättchen. Beispiele werden in der europäischen Offenlegungsschrift EP-A-187 397 beschrieben. Bevorzugt werden in Basislacken 40 bis 60 Gew.-% der vorhandenen Celluloseether bzw. insbesondere des vorhandenen Celluloseacetobutyrats durch die erfindungsgemäßen Polymerzubereitungen ausgetauscht. Der Gehalt an Cellulosethern bisheriger Basislacke lag im allgemeinen in der Größenordnung von 5 bis 20 Gew.-%, bezogen auf den Festkörpergehalt der Überzugsmittel. Hiervon können, wie erwähnt, beispielsweise 40 bis 60 Gew.-% (jeweils ebenfalls bezogen auf den Festkörpergehalt) durch die erfindungsgemäße Polymerdispersion ersetzt werden.

Beschichtungen aus Überzugsmitteln, die die erfindungsgemäßen Polymerzubereitungen enthalten, können unter üblichen Applikationsbedingungen aufgetragen werden. Beispielsweise können sie naß-in-naß mit üblichen Klarlacken überlackiert und getrocknet bzw. gehärtet werden. Als übliche Klarlacke sind beispielsweise Einkomponenten-Klarlacke geeignet, z.B. durch melaminharzhärtende oder durch blockierte Polyisocyanate härtende Klarlacke, oder Zweikomponenten-Klarlacke, z.B. durch Polyisocyanate härtbare. Es kann sich dabei um übliche Klarlacke auf Lösemittelbasis oder auf wäßriger Basis handeln.

### Beispiel 1

### Herstellung einer Polymerdispersion

Eine wäßrige 50 Gew.-% Dispersion eines Polymerisats, das durch Suspensionspolymerisation von 9,5 Gew.-% Acrylnitril, 2,5 Gew.-% Acrylamid, 22 Gew.-% Ethylacrylat, 22 Gew.-% Ethylmethacrylat, 22 Gew.-% Butylacrylat und 22 Gew.-% Butylmethacrylat erhalten worden war, wurde bei Raumtemperatur unter Rühren mit Butylacetat zu einer teigigen Masse aufgequollen. Anschließend wurde Methoxypropanol solange zugesetzt, bis ein gut rührfähiges opakes Gel erhalten wurde.

Es entstand eine milchige schwach thixotrope, filtrierbare Flüssigkeit.
- Festkörpergehalt:: (1 Stunde bei 120°C im Umluftofen getrocknet) 7 Gew.-%
- Wassergehalt :: 7 Gew.-%
- Farbe :: farblos/milchig
- Viskosität :: (Rotationsviskosimeter)
bei S = 25 s⁻¹ = 57 mPa.s
bei S = 50 s⁻¹ = 50 mPa.s
bei S = 100 s⁻¹ = 48 mPa.s
(S = Schergefälle)

Die Fließkurve zeigte Strukturviskosität mit schwacher Thixotropie.

### Beispiel 2

### Herstellung eines Basislacks

Es wurde nach folgender Rezeptur gearbeitet:

| | |
|---|---|
| Celluloseacetobutyrat | 9,19 Gew.-% |
| im Beispiel 1 hergestellte Polymerphase | 18,26 Gew.-% |
| Melaminharz | 6,18 Gew.-% |
| Polyester ölfrei (hergestellt nach Beispiel 3 oder 4) | 11,94 Gew.-% |
| Siliconöl | 0,18 Gew.-% |
| Quentscher | 0,18 Gew.-% |
| Polyurethan-Weichmacher (Carbaminsäureester von Butylurethan und Formaldehyd) | 12,08 Gew.-% |
| Metallbronce (Aufschlämmung 33,3 Gew.-% in Butylacetat) | 9,59 Gew.-% |
| Butylacetat (98 %) | 25,38 Gew.-% |

Zur Herstellung des Basislacks wird Celluloseazetobutyratlösung vorgelegt und unter intensivem Rühren mit der erfindungsgemäßen Dispersion vermischt. Dann wird unter weiterem Rühren das Melaminharz zugefügt, worauf der Polyester zugesetzt wird. Die weiteren Zusätze werden in der vorstehend angegebenen Reihenfolge zugefügt.

Der so erhaltene Basislack wurde auf ein Substrat aufgespritzt, mit Einkomponenten-Klarlack nach 10 Minuten Ablüften bei Raumtemperatur überlackiert und im Umluftofen 30 Minuten bei 130°C oder 20 Minuten bei 140°C gehärtet. Man erhielt einen guten Bronceeffekt aufgrund der vergleichbar guten Bronceorientierung und Anlöseresistenz, wie bei alleiniger Celluloseacetobutyratmodifizierung. Der Festkörpergewinn liegt in Abhängigkeit von der gewählten Celluloseacetobutyrat-Type zwischen 5 und 10 Gew.-% bei Applikationsviskosität.

### Beispiel 3

### Herstellung von Polyestern für Beispiel 2

In ein mit Heizung, Rührer, Füllkörperkolonne, Destillationsbrücke und absteigendem Kühler, Thermometer für Reaktionsgut- und Kolonnenkopfmessung ausgestattetes Reaktionsgefäßt werden 156,0 g (1,5 mol) Neopenthylglykol, 80,4 g (0,6 mol) Trimethylolpropan und 94,4 g (0,8 mol) Hexandiol-1,6 eingewogen und bei 80°C aufgeschmolzen. Danach werden 16,0 g (1 mol) Isophthalsäure und 248,2 g (1,7 mol) Adipinsäure hinzugefügt, unter Rühren mit einer Heizrate von 20°C/h auf 240°C aufgeheizt und bei dieser Temperatur bis zu einer Säurezahl von 17 mg KOH/g kondensiert.

Anschließend wird auf 120°C gekühlt und mit n-Butylacetat auf einen Festkörper von 70 % verdünnt. Das Polyesterharz hatte folgende Kennzahlen:

| | |
|---|---|
| Festkörper = | 70,8 % |
| Viskosität = | 2425 mPa.s bei 25°C |
| Säurezahl = | 15,0 mg KOH/g |
| OH-Zahl = | 102 mg KOH/g |
| Zahlenmittel des Molekulargewichts (Mn) = | 1900. |

### Beispiel 4

### Herstellung des Polyesters für Beispiel 2

In eine Apparatur, wie sie oben beschrieben wurde, werden 260,0 g (2,5 mol) Neopentylglykol und 80,4 g (0,6 mol) Trimethylolpropan eingewogen und bei 118°C aufgeschmolzen. Danach werden 149,4 g (0,9 mol) Isophthalsäure, 133,2 g (0,9 mol) Phthalsäureanhydrid und 189,8 g (1,3 mol) Adipinsäure hinzugefügt, unter Rühren mit einer Heizrate von 20°C/h auf 240°C aufgeheizt und bei dieser Temperatur bis zu einer Säurezahl von 32 mg KOH/g kondensiert.

Anschließend wird auf 120°C gekühlt und mit Xylol auf einen Festkörper von 65 % verdünnt. Das Polyesterharz hatte folgende Kennzahlen:

| | |
|---|---|
| Festkörper = | 65,1 % |
| Viskosität = | 1200 mPa.s bei 25°C |
| Säurezahl = | 28,1 mg KOH/g |
| OH-Zahl = | 75 mg KOH/g |
| Zahlenmittel des Molekulargewichts (Mn) = | 1300. |

## Patentansprüche

1. Flüssige Polymerzubereitung mit nicht-Newtonschem Fließverhalten, **dadurch gekennzeichnet,** daß sie hergestellt wurde aus
a) einer wäßrigen Dispersion mit einer Viskosität von 20 bis 200 mPa.s, mit einem Feststoffgehalt von 30 bis 60 Gew.-%, bezogen auf das Gewicht der Dispersion, eines oder mehrerer dispergierter Polymerer, mit einer Molmassenverteilung von 50000 bis über eine Million, mit einer Uneinheitlichkeit D = Mw/Mn größer 2, wobei 20 bis 60 Gew.-% des Festkörpers der dispergierten Polymeren eine Molmasse von über eine Million aufweisen und erhältich sind durch Suspensions- oder Emulsionspolymerisation von
2 - 10 Gew.-% Acrylnitril und/oder Methacrylnitril,
1 - 3 Gew.-% Acrylamid und/oder Methacrylamid und
87 - 97 Gew.-% eines oder mehrerer Acrylsäureester- und/oder Methacrylsäureester-monomerer,
wobei die Acrylsäureester- und Methacrylsäureestermonomeren durch weitere ethylenisch ungesättigte Comonomere in einer Menge bis zu 40 Gew.-% der gesamten Monomeren ersetzt sein können, in einem wäßrigen Medium, durch
b) Zugabe einer derartigen Menge eines mit Wasser nicht mischbaren, die Polymeren anlösenden oder anquellenden Lösemittels, daß die Viskosität der wäßrigen Dispersion auf mindestens das 10⁴-fache der ursprünglichen Viskosität der wäßrigen Dispersion ansteigt, jedoch nur bis maximal zum Erreichen der Grenze der Phasentrennung, und
c) gleichzeitigen oder anschließenden Zusatz eines sowohl mit Wasser als auch mit dem anlösenden oder anquellenden Lösemittel mischbaren Verdünnungsmittels in einer Menge zur Erzielung einer Viskosität der fertigen Polymerzubereitung von 25 bis 1000 mPa.s wonach
d) gegebenenfalls Wasser ganz oder teilweise entfernt wird.

2. Verfahren zur Herstellung einer flüssigen Polymerzubereitung mit nicht-Newtonschem Fließverhalten, dadurch gekennzeichnet, daß man
a) eine Suspensions- oder Emulsionspolymerisation von
2 - 10 Gew.-% Acrylnitril und/oder Methacrylnitril,
1 - 3 Gew.-% Acrylamid und/oder Methacrylamid und
87 - 97 Gew.-% eines oder mehrerer Acrylsäureester- und/oder Methacrylsäureester-monomerer,
wobei die Acrylsäureester- und Methacrylsäureester-monomeren durch weitere ethylenisch ungesättigte Comonomere in einer Menge bis zu 40 Gew.% der gesamten Monomeren ersetzt sein können, in einem wäßrigen Medium durchführt, die dabei erhaltene Dispersion mit einer Viskosität von 20 bis 200 mPa.s und mit einem Feststoffgehalt von 30 bis 60 Gew.-%, bezogen auf das Gewicht der Dispersion, eines oder mehrerer dispergierter Polymerer mit einer Molmassenverteilung von 50000 bis über eine Million mit einer Uneinheitlichkeit D = Mw/Mn größer 2, in der 20 bis 60 Gew.-% des Festkörpers der dispergierten Polymeren eine Molmasse von über eine Million aufweisen,
b) mit einem mit Wasser nicht mischbaren, die Polymeren anlösenden oder anquellenden Lösemittel in einer derartigen Menge versetzt, daß die Viskosität der wäßrigen Dispersion auf mindestens das 10⁴-fache der ursprünglichen Viskosität der wäßrigen Dispersion ansteigt, jedoch nur bis maximal zum Erreichen der Grenze der Phasentrennung, und
c) gleichzeitig oder anschließend ein sowohl mit Wasser als auch mit dem anlösenden oder anquellenden Lösemittel mischbares Verdünnungsmittel zusetzt in einer Menge zur Erzielung einer Viskosität der fertigen Polymerzubereitung von 25 bis 1000 mPa.s wonach
d) man gegebenenfalls Wasser ganz oder teilweise entfernt.

3. Polymerzubereitung oder Verfahren nach Anspruch 1 oder 2, dadurch gekennzeichnet, daß die Entfernung des Wassers in der Stufe d) erfolgt, falls sich neben der Dispersionsphase eine oder mehrere weitere Phasen gebildet haben.

4. Polymerzubereitung oder Verfahren nach Anspruch 1, 2 oder 3 dadurch gekennzeichnet, daß man in der Stufe d) ein mit Wasser azeotrop destillierbares organisches Verdünnungsmittel zusetzt und Wasser teilweise oder ganz durch azeotrope Destillation entfernt.

5. Polymerzubereitung oder Verfahren nach einem der vorhergehenden Ansprüche, dadurch gekennzeichnet, daß die zur Suspensionspolymerisation einsetzbaren weiteren ethylenisch ungesättigten Monomeren Acrylsäure, Methacrylsäure, und/oder aliphatische und/oder aromatische Vinylverbindungen sind.

6. Polymerzubereitung oder Verfahren nach einem der vorhergehenden Ansprüche, dadurch gekennzeichnet, daß in der Stufe a) als weitere Comonomere ein oder mehrere mehrfach ungesättigte Comonomere in einer Menge von 0,002 bis 5 Gew.-%, bezogen auf den Festkörpergehalt sämtlicher Monomerer eingesetzt wird.

7. Polymerzubereitung oder Verfahren nach einem der vorhergehenden Ansprüche, dadurch gekennzeichnet, daß zum Anlösen und Anquellen ein mit Wasser nicht mischbares Lösemittel aus der Reihe der Carbonsäureester, insbesondere Butylacetat, verwendet wird.

8. Polymerzubereitung oder Verfahren nach einem der vorhergehenden Ansprüche, dadurch gekennzeichnet, daß bei der Herstellung als mit Wasser mischbares Verdünnungsmittel ein Alkohol, insbesondere Methoxypropanol verwendet wird.

9. Polymerzubereitung oder Verfahren nach einem der vorhergehenden Ansprüche, dadurch gekennzeichnet, daß die (Meth)acrylsäureester-Monomeren Ester von Acrylsäure und/oder Methacrylsäure mit Alkanolen mit 1 - 4 Kohlenstoffatomen und insbesondere Ester von Acrylsäure und/oder Methacrylsäure mit Ethylalkohol und/oder n-Butylalkohol sind.

10. Polymerzubereitung oder Verfahren nach einem der vorhergehenden Ansprüche, dadurch gekennzeichnet, daß die (Meth)acrylsäureester-Monomeren Gemische aus Ethylacrylat, Ethylmethacrylat, n-Butylacrylat und n-Butylmethacrylat in annähernd gleichen Teilen sind.

11. Lösemittelhaltiges Überzugsmittel auf der Basis selbst- oder fremd-vernetzender filmbildender Bindemittel, dadurch gekennzeichnet, daß es eine Polymerzubereitung mit nicht-Newtonschem Fließverhalten gemäß einem der Ansprüche 1 und 3 bis 10 enthält.

12. Überzugsmittel nach Anspruch 11, dadurch gekennzeichnet, daß es Effektpigmente, insbesondere Metallicpigmente und/oder Farbpigmente und/oder lackübliche Additive enthält.

13. Verfahren zur Herstellung einer Mehrschicht-Effektlackierung durch Aufbringen eines filmbildenden Bindemittel, organische Lösemittel, Effektpigmente und gegebenenfalls Farbpigmente und lackübliche Additive enthaltenden Basisüberzugsmittels, kurzes Antrocknen, Aufbringen eines Klarlacküberzugsmittels und anschließendes Einbrennen, dadurch gekennzeichnet, daß als Basisüberzugsmittel ein Überzugsmittel gemäß einem der Ansprüche 11 und 12 verwendet wird.

14. Verwendung der Polymerzubereitung gemäß einem der Ansprüche 1 und 3 bis 10 in Überzugsmitteln, insbesondere zur Herstellung von Metallic-Lackierungen.

15. Verwendung der lösemittelhaltigen Überzugsmittel gemäß einem der Ansprüche 11 und 12 zur Herstellung von Metallic-Lackierungen.

## Claims

1. A liquid polymer preparation which exhibits non-Newtonian flow behaviour, **characterised in that** it has been produced from
a) an aqueous dispersion, which has a viscosity of 20 to 200 mPa.s and a solids content of 30 to 60 % by weight with respect to the weight of the dispersion, of one or more dispersible polymers having a molecular weight distribution from 50,000 to higher than one million and having a non-uniformity D = Mw/Mn greater than 2, wherein 20 to 60 % by weight of the solids content of the dispersed polymer has a molecular weight higher than one million and is obtainable by the suspension or emulsion polymerisation of
2 - 10 % by weight acrylonitrile and/or methacrylonitrile,
1 - 3 % by weight acrylamide and/or methacrylamide, and
87 - 97 % by weight of one or more acrylic acid ester and/or methacrylic acid ester monomers,
wherein the acrylic acid ester and methacrylic acid ester monomers can be replaced by other ethylenically unsaturated comonomers in an amount up to 40 *%* by weight of the total monomers, in an aqueous medium, by
b) the addition of an amount of a solvent, which is immiscible with water and which dissolves or swells the polymers, such that the viscosity of the aqueous dispersion increases to at least 10⁴ times the original viscosity of the aqueous dispersion, but only up to a maximum for reaching the limit of phase separation, and
c) the simultaneous or subsequent addition of a diluent which is miscible both with water and with the dissolving or swelling solvent in an amount for obtaining a viscosity of the finished polymer preparation of 25 to 1000 mPa.s, after which
d) water is optionally completely or partly removed.

2. A process for producing a liquid polymer preparation which exhibits non-Newtonian flow behaviour, characterised in that
a) suspension or emulsion polymerisation is effected of
2 - 10 % by weight acrylonitrile and/or methacrylonitrile,
1 - 3 % by weight acrylamide and/or methacrylamide, and
87 - 97 % by weight of one or more acrylic acid ester and/or methacrylic acid ester monomers,
wherein the acrylic acid ester and methacrylic acid ester monomers can be replaced by other ethylenically unsaturated comonomers in an amount up to 40 % by weight of the total monomers, in an aqueous medium, the dispersion which is thereby obtained, which has a viscosity of 20 to 200 mPa.s and a solids content of 30 to 60 % by weight with respect to the weight of the dispersion, of one or more dispersible polymers having a molecular weight distribution from 50,000 to higher than one million and having a non-uniformity D = Mw/Mn greater than 2, wherein 20 to 60 % by weight of the solids content of the dispersed polymer has a molecular weight higher than one million,
b) is treated with a solvent which is immiscible with water and which dissolves or swells the polymer such that the viscosity of the aqueous dispersion increases to at least 104 times the original viscosity of the aqueous dispersion, but only up to a maximum for reaching the limit of phase separation, and
c) a diluent, which is miscible both with water and with the dissolving or swelling solvent, is added simultaneously or subsequently in an amount for obtaining a viscosity of the finished polymer preparation of 25 to 1000 mPa.s, after which
d) water is optionally completely or partly removed.

3. A polymer preparation or process according to claim 1 or 2, characterised in that the removal of water in step d) is effected if one or more further phases have formed in addition to the dispersion phase.

4. A polymer preparation or process according to claim 1, 2 or 3, characterised in that an organic diluent which is azeotropically distillable with water is added in step d) and water is completely or partly removed by azeotropic distillation.

5. A polymer preparation or process according to any one of the preceding claims, characterised in that the other ethylenically unsaturated monomers which can be used for suspension polymerisation are acrylic acid, methacrylic acid, and/or aliphatic and/or aromatic vinyl compounds.

6. A polymer preparation or process according to any one of the preceding claims, characterised in that one or more multiply-unsaturated comonomers are used as further comonomers in step a), in an amount of 0.002 to 5 % by weight with respect to the solids content of the total monomers.

7. A polymer preparation or process according to any one of the preceding claims, characterised in that a water-immiscible solvent from the carboxylic acid ester series, particularly butyl acetate, is used for dissolution and swelling.

8. A polymer preparation or process according to any one of the preceding claims, characterised in that an alcohol, particularly methoxypropanol, is used as a diluent miscible with water during production.

9. A polymer preparation or process according to any one of the preceding claims, characterised in that the (meth)acrylic acid ester monomers are esters of acrylic acid and/or methacrylic acid with alkanols containing 1 - 4 carbon atoms, and in particular are esters of acrylic acid and/or acrylic acid with ethyl alcohol and/or n-butyl alcohol.

10. A polymer preparation or process according to any one of the preceding claims, characterised in that the (meth)acrylic acid ester monomers are mixtures of ethyl acrylate, ethyl methacrylate, n-butyl acrylate and n-butyl methacrylate in approximately equal portions.

11. A solvent-containing coating medium based on self- or externally-crosslinking film-forming binder vehicles, characterised in that it contains a polymer preparation which exhibits non-Newtonian flow behaviour according to any one of claims 1 and 3 to 10.

12. A coating medium according to claim 11, characterised in that it contains effect pigments, particularly metallic pigments and/or colouring pigments and/or customary lacquer additives.

13. A process for producing a multi-layer effect lacquer coating by the application of a base coating medium containing a film-forming binder vehicle, organic solvents, effect pigments and optionally colouring pigments and customary lacquer additives, effecting brief drying, application of a clear lacquer coating medium and subsequent stoving, characterised in that a coating medium according to either one of claims 11 and 12 is used as the base coating medium.

14. The use of the polymer preparation according to any one of claims 1 and 3 to 10 in coating media, particularly for the production of metallic lacquer coatings.

15. The use of the solvent-containing coating media according to either one of claims 11 and 12 for the production of metallic lacquer coatings.

## Revendications

1. Composition polymère liquide à écoulement non-newtonien, caractérisée en ce qu'elle a été préparée à partir de
a) une dispersion aqueuse à une viscosité de 20 à 200 mPa.s, à une teneur en matières solides de 30 à 60 % de son poids, d'un ou plusieurs polymères dispersés, ayant une répartition des poids moléculaires allant de 50 000 à plus d'un million, avec une hétérogénéité D = Mw/Mn supérieure à 2, 20 à 60 % en poids des matières solides des polymères dispersés ayant une masse moléculaire supérieure à un million, et qui ont été obtenus par polymérisation en suspension ou en émulsion de
2 à 10 % en poids d'acrylonitrile et/ou de méthacrylonitrile,
1 à 3 % en poids d'acrylamide et/ou de méthacrylamide et
87 à 97 % en poids d'un ou plusieurs esters acryliques et/ou méthacryliques monomères, les esters acryliques et méthacryliques monomères pouvant être remplacés par d'autres comonomères à insaturation éthylénique en quantités allant jusqu'à 40 % du poids des monomères totaux, dans un milieu aqueux,
par
b) addition d'un solvant non miscible à l'eau, dissolvant ou gonflant, en partie au moins, les polymères, en quantité telle que la viscosité de la dispersion aqueuse augmente jusqu'à au moins 10⁴ fois la viscosité initiale de la dispersion aqueuse, mais en quantité maximale limitée par la séparation de phases, et
c) addition simultanée ou subséquente d'un diluant miscible à la fois avec l'eau et avec le solvant qui a provoqué la dissolution ou le gonflement, en quantité permettant de parvenir à une viscosité de 25 à 1000 mPa.s, après quoi,
d) le cas échéant, on élimine l'eau en totalité ou en partie.

2. Procédé de préparation d'une composition polymère liquide à écoulement non-newtonien, caractérisé en ce que
a) on procède à une polymérisation en suspension ou émulsion de
2 à 10 % en poids d'acrylonitrile et/ou de méthacrylonitrile,
1 à 3 % en poids d'acrylamide et/ou de méthacrylamide et
87 à 97 % en poids d'un ou plusieurs esters acryliques et/ou méthacryliques monomères,
les esters acryliques et méthacryliques monomères pouvant être remplacés en proportions allant jusqu'à 40 % du poids des monomères totaux par d'autres comonomères à insaturation éthylénique, dans un milieu aqueux, on ajoute à la dispersion ainsi obtenue, à une viscosité de 20 à 200 mPa.s et à une teneur en matières solides de 30 à 60 % du poids de la dispersion, d'un ou plusieurs polymères en dispersion présentant une répartition des masses moléculaires allant de 50 000 à plus d'un million, avec une hétérogénéité D = Mw/Mn supérieure à 2 et dans laquelle 20 à 60 % en poids des matières solides des polymères dispersés ont une masse moléculaire supérieure à un million,
b) on ajoute un solvant non miscible à l'eau mais dissolvant ou gonflant, en partie au moins, les polymères, en quantité telle que la viscosité de la dispersion aqueuse augmente jusqu'à au moins 10⁴ fois la viscosité initiale de la dispersion aqueuse, mais en quantité maximale limitée par la séparation de phases et
c) simultanément ou consécutivement, on ajoute un diluant miscible à la fois avec l'eau et avec le solvant qui a provoqué la dissolution ou le gonflement, en quantité nécessaire pour parvenir à une viscosité de 25 à 1000 mPa.s de la composition polymère finie, après quoi
d) le cas échéant, on élimine l'eau en totalité ou en partie.

3. Composition polymère ou procédé selon revendication 1 ou 2, caractérisé en ce que l'on élimine l'eau au stade d) lorsque, en plus de la phase dispersion, il s'est formé une ou plusieurs autres phases.

4. Composition polymère ou procédé selon revendication 1, 2 ou 3, caractérisé en ce que, au stade d), on ajoute un diluant organique formant un azéotrope avec l'eau à la distillation et on élimine l'eau en totalité ou en partie par distillation azéotropique.

5. Composition polymère ou procédé selon une des revendications qui précèdent, caractérisé en ce que les autres monomères à insaturation éthylénique utilisables à la polymérisation en suspension sont l'acide acrylique, l'acide méthacrylique et/ou des dérivés vinyliques aliphatiques et/ou aromatiques.

6. Composition polymère ou procédé selon une des revendications qui précèdent, caractérisé en ce que, au stade a), on utilise en tant qu'autres comonomères un ou plusieurs comonomères multi-insaturés en quantité de 0,002 à 5 % du poids des matières solides de tous les monomères.

7. Composition polymère ou procédé selon une des revendications qui précèdent, caractérisé en ce que, pour la dissolution et le gonflement, au moins partiel, on utilise un solvant non miscible à l'eau choisi parmi les esters d'acides carboxyliques, et plus spécialement l'acétate de butyle.

8. Composition polymère ou procédé selon une des revendications qui précèdent, caractérisé en ce que l'on utilise à la préparation, en tant que diluant miscible à l'eau, un alcool, plus spécialement le méthoxypropanol.

9. Composition polymère ou procédé selon une des revendications qui précèdent, caractérisé en ce que les esters (méth)acryliques monomères sont des esters acryliques et/ou méthacryliques d'alcanols en C1-C4 et plus spécialement des esters acryliques et/ou méthacryliques de l'alcool vinylique et/ou de l'alcool n-butylique.

10. Composition polymère ou procédé selon une des revendications qui précèdent, caractérisé en ce que les esters (méth)acryliques monomères consistent en mélanges de l'acrylate d'éthyle, du méthacrylate d'éthyle, de l'acrylate de n-butyle et du méthacrylate de n-butyle en proportions à peu près égales.

11. Produit de revêtement contenant des solvants, à base de liants filmogènes auto-réticulants ou réticulants sous l'action d'un agent étranger, caractérisé en ce qu'il contient une composition polymère à écoulement non-newtonien selon une des revendications 1 et 3 à 10.

12. Produit de revêtement selon revendication 11, caractérisé en ce qu'il contient des pigments à effet, en particulier des pigments métalliques et/ou des pigments colorés et/ou des additifs usuels pour peintures et vernis.

13. Procédé pour l'application d'un revêtement à effet à plusieurs couches à l'aide d'un produit de revêtement de base contenant un liant filmogène, des solvants organiques, des pigments à effet et le cas échéant des pigments colorés et des additifs usuels pour peintures et vernis, cette application étant suivie d'un court séchage, de l'application d'un vernis clair et d'une cuisson, caractérisé en ce que l'on utilise en tant que produit de revêtement de base un produit de revêtement selon l'une des revendications 11 et 12.

14. Utilisation de la composition polymère selon une des revendications 1 et 3 à 10 dans des produits de revêtement prévus en particulier pour l'application de revêtements à effet métallique.

15. Utilisation des produits de revêtement, contenant des solvants, selon l'une des revendications 1 à 12, pour l'application de revêtements à effet métallique.
